# EUROPEAN PATENT APPLICATION

(11) **EP 4 571 870 A1**
(43) Date of publication of application: **18.06.2025**
(21) Application number: 22966116.0
(22) Date of filing: 23.11.2022
(51) Int. Cl.: H01M 4/13, H01M 10/0525

(54) **ELECTRODE SHEET, ELECTRODE ASSEMBLY, BATTERY, AND ELECTRICAL DEVICE**

(71) Applicant: Contemporary Amperex Technology (Hong Kong) Limited, Central, Hong Kong (HK)
(72) Inventor: LIU, Zhenwei, Ningde, Fujian 352100 (CN); WU, Yichen, Ningde, Fujian 352100 (CN)
(74) Representative: Ziebig Hengelhaupt Intellectual Property Attorneys Patentanwaltskanzlei PartGmbB
(86) International application number: PCT/CN2022/133693
(87) International publication number: WO 2024/108418

(57) **Abstract**

Provided are an anode electrode plate, a cathode electrode plate, an electrode assembly, a battery and a powered device. The anode electrode plate includes an anode current collector and an anode active material layer provided at a surface of the anode current collector. The anode active material layer has a first compacted density configuration region. In the first compacted density configuration region, a compacted density of the anode active material layer gradually decreases and then gradually increases in an extending direction of the anode electrode plate. The cathode electrode plate includes a cathode current collector and a cathode active material layer provided at a surface of the cathode current collector. The cathode active material layer has a second compacted density configuration region. In the second compacted density configuration region, a compacted density of the cathode active material layer gradually increases and then gradually decreases in an extension direction of the cathode electrode plate. The infiltration rate of the battery in an electrolyte can be increased by performing specific compacted density configuration on the active material layers of the electrode plates.

## Description

### FIELD

The present disclosure relates to the field of secondary batteries technology, and more particularly, to an electrode plate, an electrode assembly, a battery, and an electric device.

### BACKGROUND

In recent years, with an application range of ion secondary batteries becoming more extensive, the secondary batteries are widely used in energy storage power systems such as hydropower systems, firepower systems, wind power systems, and solar power stations, as well as in a variety of fields such as electric tools, electric bicycles, electric motorcycles, electric vehicles, military equipment, and aerospace. Higher requirements have been required for the performance of the ion secondary batteries due to great development of the secondary batteries.

In a cylindrical battery cell, a cathode electrode plate and an anode electrode plate need to be laminated and wound to form an electrode assembly with a cylindrical winding structure. The expansion force of the electrode plates inside the electrode assembly with the cylindrical winding structure is large, resulting in the battery cell is prone to generate abnormal local infiltration of the electrolyte during the charging and discharging process, and thus leading to a low infiltration rate of the battery cell in the electrolyte.

Therefore, it is required to search for an electrode plate and a battery cell structure that can effectively reduce the expansion force of the electrode plates of the battery cell and increase the infiltration rate of the electrolyte. The above requirements have become the research directions on which those skilled in the art focus their attention.

### SUMMARY

The present disclosure is made in view of the foregoing subject matter, and one of its purpose is to provide an electrode plate, an electrode assembly, a battery, and an electric device, allowing the battery including the electrode plate and the electrode assembly to have a faster infiltration rate in an electrolyte.

In order to achieve the above objectives, a first aspect of the present disclosure provides an anode electrode plate including an anode current collector and an anode active material layer provided at a surface of the anode current collector. The anode active material layer has a first compacted density configuration region. In the first compacted density configuration region, a compacted density of the anode active material layer gradually decreases and then gradually increases in an extending direction of the anode electrode plate. In this way, the expansion force of the anode active material layer of the anode electrode plate can be reduced during a charging and discharging process of the battery, and thus effectively alleviating the problem of abnormal local infiltration in the electrolyte and increasing the infiltration rate of the battery in the electrolyte.

In an embodiment, the first compacted density configuration region covers the entire anode electrode plate in a length direction of the anode electrode plate.

In an embodiment, the first compacted density configuration region extends from a position at 6% of a length of the anode electrode plate to a position at 80% of the length of the anode electrode plate. In this way, under the same compacted density range (i.e., a difference between the maximum compacted density and the minimum compacted density in the first compacted density configuration region), the expansion force of the anode active material layer of the anode electrode plate can be reduced better and the infiltration rate of the electrolyte can be increased better.

In an embodiment, the first compacted density configuration region extends from a position at 10% of the length of the anode electrode plate to a position at 70% of the length of the anode electrode plate. In this way, under the same compacted density range, the expansion force of the anode active material layer of the anode electrode plate can be further reduced and the infiltration rate of the electrolyte can be further increased.

In an embodiment, in the first compacted density configuration region, the compacted density of the anode active material layer varies continuously in the extending direction of the anode electrode plate. This compacted density configuration can effectively reduce the expansion force of the anode active material layer of the anode electrode plate and can effectively increase the infiltration rate of the electrolyte.

In an embodiment, in the first compacted density configuration region, a difference between a maximum compacted density and a minimum compacted density of the anode active material layer in the extending direction of the anode electrode plate ranges from 0.01 g/cm³ to 1.00 g/cm³. The difference between the compacted densities in the first compacted density configuration region is within the above range, such that the expansion force of the anode active material layer of the anode electrode plate can be reduced better and the infiltration rate of the electrolyte can be increased better.

In an embodiment, in the first compacted density configuration region, the difference between the maximum compacted density and the minimum compacted density of the anode active material layer in the extending direction of the anode electrode plate ranges from 0.01 g/cm³ to 0.60 g/cm³. In this way, the expansion force of the anode active material layer can be reduced better and the infiltration rate of the electrolyte can be further increased.

In an embodiment, in the extending direction of the anode electrode plate, a compacted density of the anode active material layer at two ends of the first compacted density configuration region varies continuously with a compacted density of the anode active material layer outside the first compacted density configuration region.

In an embodiment, in the first compacted density configuration region, the compacted density of the anode active material layer varies in a gradient in the extending direction of the anode electrode plate. This compacted density configuration can effectively reduce the expansion force of the anode active material layer of the anode electrode plate and can effectively increase the infiltration rate of the electrolyte.

In an embodiment, in the first compacted density configuration region, the compacted density of the anode active material layer varies in 3 to 15 gradients, and a compacted density difference between compacted densities at two adjacent gradients ranges from 0.01 g/cm³ to 0.30 g/cm³. In this way, the infiltration rate of the electrolyte can be further increased.

In an embodiment, in the first compacted density configuration region, a length of a region where the compacted density of the anode active material layer continuously decreases is equal to a length of a region where the compacted density of the anode active material layer continuously increases. In this way, the infiltration rate of the electrolyte can be increased better.

A second aspect of the present disclosure provides a cathode electrode plate including a cathode current collector and a cathode active material layer provided at a surface of the cathode current collector. The cathode active material layer has a second compacted density configuration region. In the second compacted density configuration region, a compacted density of the cathode active material layer gradually increases and then gradually decreases in an extension direction of the cathode electrode plate. In this way, when the cathode electrode plate and the anode electrode plate are combined to form an electrode assembly, the second compacted density configuration region of the cathode electrode plate can provide an expansion space for the anode active material layer of the anode electrode plate, and thus effectively alleviating the problem of abnormal local infiltration of the electrolyte and increasing the infiltration rate of the battery in the electrolyte.

In an embodiment, the second compacted density configuration region covers the entire cathode electrode plate in a length direction of the cathode electrode plate.

In an embodiment, the second compacted density configuration region extends from a position at 6% of a length of the cathode electrode plate to a position at 80% of the length of the cathode electrode plate. In this way, under the same compacted density range, the problem of abnormal local infiltration of the electrolyte can be alleviated better and the infiltration rate of the battery in the electrolyte can be increased better.

In an embodiment, the second compacted density configuration region extends from a position at 10% of the length of the cathode electrode plate to a position at 70% of the length of the cathode electrode plate. In this way, the expansion space for the anode active material layer can be better provided and the infiltration rate of the electrolyte can be further increased.

In an embodiment, in the second compacted density configuration region, the compacted density of the cathode active material layer varies continuously in the extending direction of the cathode electrode plate.

In an embodiment, in the second compacted density configuration region, a difference between a maximum compacted density and a minimum compacted density of the cathode active material layer in the extending direction of the cathode electrode plate ranges from 0.01 g/cm³ to 1.50 g/cm³. The difference of the compacted density in the second compacted density configuration region is within the above range, which can provide the expansion space for the matched anode active material layer of the anode electrode plate and increase the infiltration rate of the electrolyte.

In an embodiment, in the second compacted density configuration region, the difference between the maximum compacted density and the minimum compacted density of the cathode active material layer in the extending direction of the cathode electrode plate ranges from 0.01 g/cm³ to 0.80 g/cm³. In this way, the expansion space for the anode active material layer can be better provided and the infiltration rate of the electrolyte can be further increased.

In an embodiment, in the extending direction of the cathode electrode plate, a compacted density of the cathode active material layer at two ends of the second compacted density configuration region varies continuously with a compacted density of the cathode active material layer outside the second compacted density configuration region.

In an embodiment, in the second compacted density configuration region, the compacted density of the cathode active material layer varies in a gradient in the extending direction of the cathode electrode plate.

In an embodiment, in the second compacted density configuration region, the compacted density of the cathode active material layer varies in 3 to 20 gradients, and a compacted density difference between compacted densities at two adjacent gradients ranges from 0.01 g/cm³ to 0.50 g/cm³. In this way, the infiltration rate of the electrolyte can be further increased.

In an embodiment, in the second compacted density configuration region, a length of a region where the compacted density of the cathode active material layer continuously increases is equal to a length of a region where the compacted density of the cathode active material layer continuously decreases, which can further increase the infiltration rate of the electrolyte.

A third aspect of the present disclosure provides an electrode assembly including an anode electrode plate and a cathode electrode plate. The anode electrode plate is the anode electrode plate according to the first aspect of the present disclosure and/or the cathode electrode plate is the cathode electrode plate according to the second aspect of the present disclosure. The infiltration rate of the electrolyte can be effectively increased.

In an embodiment, the anode electrode plate is the anode electrode plate according to the first aspect of the present disclosure, and the cathode electrode plate is the cathode electrode plate according to the second aspect of the present disclosure. A position of the first compacted density configuration region of the anode electrode plate corresponds to a position of the second compacted density configuration region of the cathode electrode plate. In this way, the infiltration rate of the electrolyte can be increased better.

In an embodiment, the electrode assembly is a cylindrical electrode assembly formed by stacking and winding the anode electrode plate and the cathode electrode plate.

A fourth aspect of the present disclosure provides a battery including a casing, an electrode assembly, and an electrolyte. The electrode assembly includes the electrode assembly according to the third aspect of the present disclosure, and is accommodated in an inner cavity of the casing. The electrolyte is contained in the inner cavity of the casing and infiltrates the electrode assembly. The battery cell has solved the problem of abnormal local infiltration of the electrolyte during the charging and discharging process and has a higher infiltration rate of the electrolyte.

A fifth aspect of the present disclosure provides an electric device including the battery according to the fourth aspect of the present disclosure.

The anode electrode plate of the present disclosure allows the compacted density of the anode active material layer in the first compacted density configuration region to gradually decrease and then gradually increase in the extending direction of the anode electrode plate by performing compacted density configuration on the first compacted density configuration region of the anode active material layer. This can reduce the expansion force of the anode active material layer of the anode electrode plate during the charging and discharging process of the battery, and thus effectively alleviating the problem of abnormal local infiltration of the electrolyte and increasing the infiltration rate of the battery in the electrolyte.

The cathode electrode plate of the present disclosure allows the compacted density of the cathode active material layer in the second compacted density configuration region to gradually increase and then gradually decrease in the extending direction of the cathode electrode plate by performing compacted density configuration on the second compacted density configuration region of the cathode active material layer. When the cathode electrode plate and the anode electrode plate are assembled to form an electrode assembly (in particular, the second compacted density configuration region matches the first compacted density configuration region of the cathode electrode plate according to the present disclosure), the second compacted density configuration region of the cathode electrode plate can provide an expansion space for the anode active material layer of the anode electrode plate, and thus effectively alleviating the problem of abnormal local infiltration of the electrolyte and increasing the infiltration rate of the battery in the electrolyte.

### BRIEF DESCRIPTION OF THE DRAWINGS

FIG. 1 is a schematic partial diagram of a pair of an anode electrode plate and a cathode electrode plate according to Embodiment 1 of the present disclosure.
FIG. 2 is a schematic partial diagram of a pair of an anode electrode plate and a cathode electrode plate according to Embodiment 2 of the present disclosure.
FIG. 3 is a schematic partial diagram of a pair of an anode electrode plate and a cathode electrode plate according to Embodiment 13 of the present disclosure.
FIG. 4 is a schematic partial diagram of a pair of an anode electrode plate and a cathode electrode plate according to Embodiment 14 of the present disclosure.
FIG. 5 is a schematic diagram of an electric device using a battery as a power source according to an embodiment of the present disclosure.

Reference numbers:
1 anode electrode plate; 2 cathode electrode plate; 3 electric device; 11 anode current collector; 12 anode active material layer; 13 first compacted density configuration region; 21 cathode current collector; 22 cathode active material layer; 23 second compacted density configuration region.

### DETAILED DESCRIPTION

Embodiments of an electrode plate, an electrode assembly, a battery cell, a secondary battery and an electric device of the present disclosure are described in detail below with appropriate reference to the detailed description of the accompanying drawings. However, there may be cases where unnecessary detailed description is omitted. For example, detailed descriptions of well-known matters and repeated descriptions of practically identical structures are omitted. This is to avoid making the following description unnecessarily lengthy to facilitate understanding for those skilled in the art. In addition, the drawings and the following description are provided to enable those skilled in the art to fully understand the present application and are not intended to limit the subject matter recited in the claims.

The "ranges" disclosed herein are defined in terms of lower and upper limits, a given range is defined by selecting a lower limit and an upper limit, and the selected lower and upper limits defines boundaries of a particular range. Ranges defined in this manner may or may not include end values and may be arbitrarily combined, i.e., any lower limit may be combined with any upper limit to form a range. For example, if ranges of 60 to 120 and 80 to 110 are listed for a particular parameter, it is understood that ranges of 60 to 110 and 80 to 120 are also contemplated. In addition, if listed minimum range values are 1 and 2 and if listed maximum range values are 3, 4, and 5, the following ranges are all conceivable: 1 to 3, 1 to 4, 1 to 5, 2 to 3, 2 to 4, and 2 to 5. In the present application, unless otherwise indicated, the numerical range "a to b" represents an abbreviated representation of any real number combination between a and b, where a and b are both real numbers. For example, a numerical range of "0 to 5" indicates that all real numbers between "0 to 5" have been fully included herein, and "0 to 5" is merely a shorthand representation of combinations of these numbers. In addition, when it is stated that a certain parameter is an integer equal to or greater than 2, it is equivalent to disclosing that the parameter is, e.g., an integer of 2, 3, 4, 5, 6, 7, 8, 9, 10, 11, 12, etc.

All embodiments and alternative embodiments of the present application may be combined with each other to form a new technical solution if not specifically stated.

Unless otherwise specified, all the technical features and optional technical features of the present application may be combined with each other to form a new technical solution.

Unless otherwise specified, all steps of the present application may be performed sequentially or may be performed randomly, preferably sequentially. For example, the process includes steps (a) and (b), meaning that the process may include steps (a) and (b) performed sequentially, or may include steps (b) and (a) performed sequentially. For example, the process may further include step (c), meaning that step (c) may be added to the process in any order, e.g., the process may include steps (a), (b), and (c), include steps (a), (c), and (b), or include steps (c), (a), and (b) or the like.

If not specifically stated, "including" and "incorporating" described herein are intended to be open-ended as well as closed-ended. For example, "including" and "comprising" may mean that other components not listed may be included or incorporated, or that only listed components may be included or incorporated.

In the present application, the term "or" is inclusive if not specifically stated. For example, a phrase "A or B" means "A, B, or both A and B". More specifically, a condition of "A or B" is satisfied by any one of the following conditions: A is true (or present) and B is false (or not present); A is false (or absent) and B is true (or present); or both A and B are true (or present).

In a cylindrical battery cell, a cathode electrode plate and an anode electrode plate need to be laminated and wound to form an electrode assembly with a cylindrical winding structure. The expansion force of the electrode plates inside the electrode assembly with the cylindrical winding structure is large, resulting in the battery cell is prone to generate abnormal local infiltration of the electrolyte during the charging and discharging process, and thus leading to a low infiltration rate of the battery cell in the electrolyte. Therefore, it is required to search for an electrode plate and a battery cell structure that can effectively reduce the expansion force of the electrode plates of the battery cell and increase the infiltration rate of the electrolyte. The above requirements have become the research directions on which those skilled in the art focus their attention.

The inventors have researched and discovered an electrode plate. A compacted density configuration is performed in a specific manner on the active material layer of the current collector, such that the expansion force of the electrode plate can be effectively reduced and the problem of abnormal local infiltration of the electrolyte during the charging and discharging process can be solved, and thus improving the infiltration rate of the battery in the electrolyte.

In some embodiments, a first aspect of the present disclosure provides an anode electrode plate, which includes an anode current collector and an anode active material layer provided at a surface of the anode current collector. The anode active material layer has a first compacted density configuration region. In the first compacted density configuration region, a compacted density of the anode active material layer firstly gradually decreases and then gradually increases in an extending direction of the anode electrode plate.

The anode electrode plate of the present disclosure includes the first compacted density configuration region arranged on the anode active material layer, to allow the compacted density of the anode active material layer in the first compacted density configuration region firstly gradually decreases and then gradually increases in the extending direction of the electrode plate. That is, in the first compacted density configuration region, the compacted density of the anode active material layer at two ends in the extending direction of the electrode plate is greater than the compacted density in the middle thereof. In the same coating surface density, the compacted density is inversely proportional to the thickness of the anode active material layer, i.e., h=CW/PD, where h represents the thickness of the material layer, CW represents the coating surface density, and PD represents the compacted density. Accordingly, the thickness of the anode active material layer at the two ends in the first compacted density configuration region is smaller than the thickness in the middle thereof. In this way, the expansion force of the anode active material layer of the anode electrode plate can be reduced during the charging and discharging process of the battery, and thus effectively alleviating the problem of abnormal local infiltration of the electrolyte and increasing the infiltration rate of the battery in the electrolyte.

It has been found by research that the expansion force of the anode active material layer on the anode electrode plate is larger in a region close to the center in a length direction of the electrode plate during the charging and discharging process, and the expansion forces at the two ends are relatively smaller. Accordingly, the expansion rate of the anode active material layer close to the center is also relatively large. The compacted density of the anode active material layer in the first compacted density configuration region gradually decreases and then gradually increases in the extending direction of the electrode plate, such that the anode electrode plate can accommodate better with the change trend of the expansion force of the active material and have a superior increased infiltration rate of the electrolyte.

It should be noted that "gradual decreasing and then gradual increasing of the compacted density in the extending direction of the electrode plate" may be continuously decreasing and then continuously increasing, or may be decreasing in a certain gradient and then increasing in a certain gradient.

In an embodiment, the above compacted density configuration may be formed by evenly coating the anode active material on upper and lower surfaces of the anode current collector and drying it, and then rolling the anode active material on the upper and lower surfaces by a roller equipment. The compacted densities at various portions can be adjusted by adjusting a gap between an upper roller and a lower roller of the roller equipment.

In some embodiments, the first compacted density configuration region covers the entire anode electrode plate in the length direction of the anode electrode plate. That is, the first compacted density configuration region extends from a starting point to an end point of the anode electrode plate in the extending direction of the anode electrode plate. In other words, the compacted density configuration is performed on the anode active material layer of the anode electrode plate according to the above rules.

In some embodiments, the first compacted density configuration region covers the anode electrode plate from a position at 6% of a length of the anode electrode plate to a position at 80% of the length of the anode electrode plate. That is, the first compacted density configuration region includes only part of the entire length of the anode electrode plate, that is, the compacted density configuration is performed only on a portion of the anode electrode plate starting from the position at 6% of the length of the anode electrode plate to the position at 80% of the length of the anode electrode plate.

It should be noted that the starting position in the extending direction of the anode electrode plate is defined as a position at 0% of the length, and the ending position is defined as a position at 100% of the length.

It has been found by research that expansion forces of various portions of the anode active material layer of the anode electrode plate are not consistent during the charging and discharging process. The expansion of the anode active material layer is relatively larger in the region of the anode electrode plate from the position at 6% of the length to the position at 80% of the length of the anode electrode plate. Accordingly, the first compacted density configuration region is configured to extend from the position at 6% of the length of the anode electrode plate to the position at 80% of the length of the anode electrode plate, such that the expansion force of the anode active material layer of the anode electrode plate can be reduced better under the same compacted density difference (i.e., the difference between the maximum compacted density and the minimum compacted density in the first compacted density configuration region), and the infiltration rate of the electrolyte can be improved.

In some embodiments, the first compacted density configuration region extends from a position at 10% of the length of the anode electrode plate to a position at 70% of the length of the anode electrode plate. It is further found that the first compacted density configuration region that is configured to extend from the position at 10% of the length of the anode electrode plate to the position at 70% of the length of the anode electrode plate can further reduce the expansion force of the anode active material layer and further increase the infiltration rate of the electrolyte.

In an embodiment, the first compacted density configuration region occupies an entire width of the anode electrode plate. That is, the first compacted density configuration region covers the entire width of the anode electrode plate.

In an embodiment, in the first compacted density configuration region, the compacted density of the anode active material layer varies continuously in the extending direction of the anode electrode plate. That is to say, in the first compacted density configuration region, the compacted density of the anode active material layer in the extending direction of the anode electrode plate is continuous, and there is no sudden change in the compacted density. Specifically, the compacted density in the first compacted density configuration region may vary in accordance with a certain mathematical function, such as linear change and quadratic function change.

In an embodiment, in the first compacted density configuration region, a difference of the compacted densities (a difference between a maximum value and a minimum value, i.e., a compacted density difference) of the anode active material layer in the extending direction of the anode electrode plate ranges from 0.01 g/cm³ to 1.00 g/cm³. In other words, in the first compacted density configuration region, the compacted density difference between the maximum compacted density and the minimum compacted density of the anode active material layer is in the range of 0.01 g/cm³ to 1.00 g/cm³. The compacted density difference in the first compacted density configuration region is configured to be within the above range, which can reduce the expansion force of the anode active material layer of the anode electrode plate and increase the infiltration rate of the electrolyte.

It can be understood that in the first compacted density configuration region, the difference between the maximum compacted density and the minimum compacted density of the anode active material layer in the extending direction of the anode electrode plate may be, but is not limited to, 0.01 g/cm³, 0.05 g/cm³, 0.10 g/cm³, 0.20 g/cm³, 0.30 g/cm³, 0.40 g/cm³, 0.50 g/cm³, 0.60 g/cm³, 0.70 g/cm³, 0.80 g/cm³, 0.90 g/cm³, and 1.00 g/cm³.

In some embodiments, in the first compacted density configuration region, the difference between the maximum compacted density and the minimum value of the compacted density of the anode active material layer in the extending direction of the anode electrode plate ranges from 0.01 g/cm³ to 0.60 g/cm³. It is further found that the compacted density difference in the first compacted density configuration region is configured to be within the above range, which can reduce the expansion force of the anode active material layer and increase the infiltration rate of the electrolyte.

In an embodiment, in the extending direction of the anode electrode plate, the compacted densities of the anode active material layer at the two ends of the first compacted density configuration region and a compacted density of the anode active material layer outside the first compacted density configuration region vary continuously. In other words, there is continuous transition between the compacted densities of the anode active material layer at the two ends of the first compacted density configuration region and the compacted density of the anode active material layer outside of the first compacted density configuration region without sudden change of the compacted density.

In an embodiment, in the first compacted density configuration region, the compacted density of the anode active material layer varies in a gradient in the extending direction of the anode electrode plate. That is to say, the compacted density of the anode active material layer in the extending direction of the anode electrode plate is not continuous in the first compacted density configuration region, but varies in a plurality of gradients and the compacted densities in the plurality of gradients may be different. This compacted density configuration can likewise have the effect of reducing the expansion force of the anode active material layer of the anode electrode plate and increasing the infiltration rate of the electrolyte.

In an embodiment, in the first compacted density configuration region, the compacted density of the anode active material layer varies in 3 to 15 gradients, and a compacted density difference between two adjacent gradients ranges from 0.01 g/cm³ to 0.30 g/cm³.

It can be understood that in the first compacted density configuration region, the number of the varying gradients of the compacted density of the anode active material layer may be, but is not limited to, 3, 4, 5, 6, 7, 8, 9, 10, 11, 12, 13, 14, and 15. The compacted density difference between the two adjacent gradients may be, but is not limited to, 0.01 g/cm³, 0.02 g/cm³, 0.05 g/cm³, 0.08 g/cm³, 0.10 g/cm³, 0.12 g/cm³, 0.15 g/cm³, 0.18 g/cm³, 0.20 g/cm³, 0.22 g/cm³, 0.25 g/cm³, 0.28 g/cm³, and 0.30 g/cm³.

In an embodiment, in the first compacted density configuration region, a length of a region where the compacted density of the anode active material layer continuously decreases is equal to a length of a region where the compacted density of the anode active material layer continuously increases. Further, the compacted density of the anode active material layer is symmetrically distributed with respect to a middle section of the first compacted density configuration region perpendicular to the extending direction of the anode electrode plate. That is, compacted densities of two potions of the anode active material layer that are located on two sides of the middle section of the first compacted density configuration region correspond to each other, and compacted densities at the same distance from the middle section on the two sides of the middle section are equal.

In some embodiments, a second aspect of the present disclosure provides a cathode electrode plate, which includes a cathode current collector and a cathode active material layer provided at a surface of the cathode current collector. The cathode active material layer has a second compacted density configuration region. In the second compacted density configuration region, a compacted density of the cathode active material layer gradually increases firstly and then gradually decreases in an extending direction of the cathode electrode plate.

The cathode electrode plate of the present disclosure includes the second compacted density configuration region arranged on the cathode active material layer, to allow the compacted density of the cathode active material layer in the second compacted density configuration region gradually increases firstly and then gradually decreases in the extending direction of the electrode plate. That is, in the second compacted density configuration region, the compacted density of the cathode active material layer at two ends in the extending direction of the electrode plate is smaller than the compacted density in the middle thereof. Accordingly, the thickness of the cathode active material layer at the two ends in the second compacted density configuration region is greater than the thickness in the middle thereof. In this way, when the cathode electrode plate and the anode electrode plate are cooperated to each other to form an electrode assembly, the second compacted density configuration region of the cathode electrode plate can provide an expansion space for the anode active material layer of the anode electrode plate, and thus effectively alleviating the problem of abnormal local infiltration in the electrolyte and increasing the infiltration rate of the battery in the electrolyte.

It should be noted that the cathode electrode plate may be used in conjunction with the anode electrode plate in the first aspect of the present disclosure to form an electrode assembly, or may be used in conjunction with a common anode electrode plate to form an electrode assembly. It is preferable to use the cathode electrode plate in conjunction with the anode electrode plate of the first aspect of the present disclosure. In this way, on the one hand, the compacted density configuration in the first compacted density configuration region can reduce the expansion of the anode active material layer, and on the other hand, the compacted density configuration in the second compacted density configuration region can provide an expansion space for the anode active material layer. The two aspects cooperate with each other to more effectively increase the infiltration rate of the battery in the electrolyte. When the cathode electrode plate is used in conjunction with the anode electrode plate of the first aspect of the present disclosure, it is preferable to allow the position of the first compacted density configuration region to correspond to the position of the second compacted density configuration region.

In an embodiment, the above compacted density configuration may be formed by evenly coating the cathode active material on upper and lower surfaces of the cathode current collector and drying it, and then rolling the cathode active material on the upper and lower surfaces by a roller equipment. The compacted densities at various portions can be adjusted by adjusting a gap between an upper roller and a lower roller of the roller equipment.

In some embodiments, the second compacted density configuration region covers the entire cathode electrode plate in the length direction of the cathode electrode plate. That is, the second compacted density configuration region extends from a starting point to an end point of the cathode electrode plate in the extending direction of the cathode electrode plate. In other words, the compacted density configuration is performed on the cathode active material layer of the cathode electrode plate according to the above rules.

In some embodiments, the second compacted density configuration region covers the cathode electrode plate from a position at 6% of a length of the cathode electrode plate to a position at 80% of the length of the cathode electrode plate. That is, the second compacted density configuration region includes only part of the entire length of the cathode electrode plate, that is, the compacted density configuration is performed only on a portion of the cathode electrode plate starting from the position at 6% of the length of the cathode electrode plate to the position at 80% of the length of the cathode electrode plate.

It should be noted that the starting position in the extending direction of the cathode electrode plate is defined as a position at 0% of the length, and the ending position is defined as a position at 100% of the length.

Expansion forces of various portions of the cathode active material layer of the cathode electrode plate are not consistent during the charging and discharging process. The expansion of the cathode active material layer is relatively larger in the region of the cathode electrode plate from the position at 6% of the length to the position at 80% of the length of the cathode electrode plate. Accordingly, the second compacted density configuration region is configured to extend from the position at 6% of the length of the cathode electrode plate to the position at 80% of the length of the cathode electrode plate, such that the cathode electrode plate can provide an expansion space for the anode electrode plate assembled with the cathode electrode plate under the same compacted density difference (i.e., the difference between the maximum compacted density and the minimum compacted density in the second compacted density configuration region), and the infiltration rate of the electrolyte can be improved better.

In some embodiments, the second compacted density configuration region extends from a position at 10% of the length of the cathode electrode plate to a position at 70% of the length of the cathode electrode plate. The second compacted density configuration region that is configured to extend from the position at 10% of the length of the cathode electrode plate to the position at 70% of the length of the cathode electrode plate can provide an expansion space for the anode active material layer and further increase the infiltration rate of the electrolyte.

In an embodiment, the second compacted density configuration region occupies an entire width of the cathode electrode plate. That is, the second compacted density configuration region covers the entire width of the cathode electrode plate.

In an embodiment, in the second compacted density configuration region, the compacted density of the cathode active material layer varies continuously in the extending direction of the cathode electrode plate. That is to say, in the second compacted density configuration region, the compacted density of the cathode active material layer in the extending direction of the cathode electrode plate is continuous, and there is no sudden change in the compacted density. Specifically, the compacted density in the second compacted density configuration region may vary in accordance with a certain mathematical function, such as linear change and quadratic function change.

In an embodiment, in the second compacted density configuration region, a difference (i.e., a compacted density difference) between a maximum compacted density and a minimum compacted density of the cathode active material layer in the extending direction of the cathode electrode plate ranges from 0.01 g/cm³ to 1.50 g/cm³. In other words, in the second compacted density configuration region, the compacted density difference between the maximum compacted density and the minimum compacted density of the cathode active material layer is in the range of 0.01 g/cm³ to 1.50 g/cm³. The compacted density difference in the second compacted density configuration region is configured to be within the above range, which can better provide an expansion space for the anode active material layer of the anode electrode plate cooperated with the cathode electrode plate, and increase the infiltration rate of the electrolyte.

It can be understood that in the second compacted density configuration region, the difference between the maximum compacted density and the minimum compacted density of the cathode active material layer in the extending direction of the cathode electrode plate may be, but is not limited to, 0.01 g/cm³, 0.05 g/cm³, 0.10 g/cm³, 0.20 g/cm³, 0.30 g/cm³, 0.40 g/cm³, 0.50 g/cm³, 0.60 g/cm³, 0.70 g/cm³, 0.80 g/cm³, 0.90 g/cm³, 1.00 g/cm³, 1.10 g/cm³, 1.20 g/cm³, 1.30 g/cm³, 1.40 g/cm³, and 1.50 g/cm³.

In some embodiments, in the second compacted density configuration region, the difference between the maximum compacted density and the minimum value of the compacted density of the cathode active material layer in the extending direction of the cathode electrode plate ranges from 0.01 g/cm³ to 0.80 g/cm³. It is further found that the compacted density difference in the second compacted density configuration region is configured to be within the above range, which can provide the expansion space for the anode active material layer and further increase the infiltration rate of the electrolyte.

In an embodiment, in the extending direction of the cathode electrode plate, the compacted densities of the cathode active material layer at the two ends of the second compacted density configuration region and a compacted density of the cathode active material layer outside the second compacted density configuration region vary continuously. In other words, there is continuous transition between the compacted densities of the cathode active material layer at the two ends of the second compacted density configuration region and the compacted density of the cathode active material layer outside of the second compacted density configuration region without sudden change of the compacted density.

In an embodiment, in the second compacted density configuration region, the compacted density of the cathode active material layer varies in a gradient in the extending direction of the cathode electrode plate. That is to say, the compacted density of the cathode active material layer in the extending direction of the cathode electrode plate is not continuous in the second compacted density configuration region, but varies in a plurality of gradients and the compacted densities in the plurality of gradients may be different. This compacted density configuration can likewise have the effect of providing the expansion space for the anode active material layer of the anode electrode plate and increasing the infiltration rate of the electrolyte.

In an embodiment, in the second compacted density configuration region, the compacted density of the cathode active material layer varies in 3 to 20 gradients, and a compacted density difference between two adjacent gradients ranges from 0.01 g/cm³ to 0.50 g/cm³.

It can be understood that in the second compacted density configuration region, the number of the varying gradients of the compacted density of the cathode active material layer may be, but is not limited to, 3, 4, 5, 6, 7, 8, 9, 10, 11, 12, 13, 14, 15, 16, 17, 18, 19, and 20. The compacted density difference between the two adjacent gradients may be, but is not limited to, 0.01 g/cm³, 0.02 g/cm³, 0.05 g/cm³, 0.08 g/cm³, 0.10 g/cm³, 0.12 g/cm³, 0.15 g/cm³, 0.18 g/cm³, 0.20 g/cm³, 0.22 g/cm³, 0.25 g/cm³, 0.28 g/cm³, 0.30 g/cm³, 0.32 g/cm³, 0.34 g/cm³, 0.36 g/cm³, 0.38 g/cm³, 0.40 g/cm³, 0.42 g/cm³, 0.45 g/cm³, 0.48 g/cm³, and 0.50 g/cm³.

In an embodiment, in the second compacted density configuration region, a length of a region where the compacted density of the cathode active material layer continuously increases is equal to a length of a region where the compacted density of the cathode active material layer continuously decreases. Further, the compacted density of the cathode active material layer is symmetrically distributed with respect to a middle section of the second compacted density configuration region perpendicular to the extending direction of the cathode electrode plate. That is, compacted densities of two potions of the cathode active material layer that are located on two sides of the middle section of the second compacted density configuration region correspond to each other, and compacted densities at the same distance from the middle section on the two sides of the middle section are equal.

In some embodiments, a third aspect of the present disclosure provides an electrode assembly including an anode electrode plate and a cathode electrode plate. The anode electrode plate is the anode electrode plate according to the first aspect of the present disclosure and/or the cathode electrode plate is the cathode electrode plate according to the second aspect of the present disclosure.

In some embodiments, the anode electrode plate of the electrode assembly is the anode electrode plate of the first aspect of the present disclosure. The cathode electrode plate employs a common cathode electrode plate, that is, the cathode active material layer of the cathode electrode plate has the same compacted density at all portions thereof.

In some embodiments, the anode electrode plate of the electrode assembly employs a common anode electrode plate, that is, the anode active material layer of the anode electrode plate has the same compacted density at all portions thereof. However, the cathode electrode plate employs the cathode electrode plate of the second aspect of the present disclosure.

In some embodiments, the anode electrode plate of the electrode assembly employs the anode electrode plate of the first aspect of the present disclosure, and the cathode electrode plate employs the cathode electrode plate of the second aspect of the present disclosure.

The infiltration rate of the battery in the electrolyte can be effectively improved by assembling the anode electrode plate according to the first aspect of the present disclosure and/or the cathode electrode plate according to the second aspect of the present disclosure to form an electrode assembly, and by the compacted density configuration in the first compacted density configuration region and in the second compacted density configuration region. Preferably, the anode electrode plate of the first aspect of the present disclosure and the cathode electrode plate of the second aspect of the present disclosure are assembled to form the electrode assembly. The cooperation of the compacted density configuration in the first compacted density configuration region with the compacted density configuration in the second compacted density configuration region can improve the infiltration rate of the electrolyte.

In an embodiment, the electrode assembly is a cylindrical electrode assembly formed by stacking and winding the anode electrode plate and the cathode electrode plate. In a cylindrical battery cell, the expansion of the electrode active material during the charging and discharging process is more likely to cause the problem of abnormal local infiltration in the electrolyte. The structural design of the present disclosure in the cylindrical electrode assembly can alleviate the abnormal local infiltration in the electrolyte well.

In some embodiments, a fourth aspect of the present disclosure provides a battery including a casing, an electrode assembly, and an electrolyte, and the housing has an inner cavity. The electrode assembly includes the electrode assembly according to the third aspect of the present disclosure, and is accommodated in the inner cavity of the casing. The electrolyte is contained in the inner cavity of the casing and infiltrates the electrode assembly. The battery cell of the present disclosure has solved the problem of abnormal local infiltration in the electrolyte during a charging and discharging process well and has a higher infiltration rate of the electrolyte.

In some embodiments, a fifth aspect of the present disclosure provides an electric device including the battery according to the fourth aspect of the present disclosure. The battery serves as a power source for the electric device to provide electrical energy for the electric device.

The battery and the electric device of the present disclosure will be described below with appropriate reference to the drawings.

Generally, the battery includes a cathode electrode plate 2, an anode electrode plate 1, an electrolyte, and a separator. During charging and discharging of the battery, active ions are intercalated and deintercalated back and forth between the cathode electrode plate 2 and the anode electrode plate 1. The electrolyte serves to conduct the active ions between the cathode electrode plate 2 and the anode electrode plate 1. The separator is arranged between the cathode electrode plate 2 and the anode electrode plate 1, and mainly serves to prevent short circuit between the cathode electrode and the anode electrode while allowing the ions to pass therethrough.

### [Cathode Electrode Plate]

The cathode electrode plate 2 includes a cathode current collector 21 and a cathode film layer (i.e., a cathode active material layer 22) disposed on at least one surface of the cathode current collector 21, and the cathode film layer includes a cathode active material.

As an example, the cathode current collector 21 has two surfaces opposite to each other in a thickness direction thereof. The cathode film layer is arranged on either or both of the two opposite surfaces of the cathode current collector 21.

In some embodiments, the cathode current collector 21 may be a metal foil or a composite current collector. For example, the metal foil is a copper foil. The composite current collector may include a macromolecular material base-layer and a metal layer formed on at least one surface of the macromolecular material base-material. The composite current collector may be formed by forming a metallic material on a macromolecular base material. The metallic material includes, but is not limited to, aluminum, aluminum alloy, nickel, nickel alloy, titanium, titanium alloy, silver, and silver alloy, etc. The macromolecular base material includes a substrate of polypropylene (PP), polyethylene terephthalate (PET), polybutylene terephthalate (PBT), polystyrene (PS), and polyethylene (PE), etc.

In some embodiments, the cathode active material may include cathode active materials well-known in the art for batteries. As an example, the cathode active material may include at least one of lithium-containing phosphate with an olivine structure, lithium transition metal oxide, and their respective modified compounds. However, the present disclosure is not limited to these materials, and other conventional materials that can be used as the cathode active material of the batteries can also be used. These cathode active materials can be used alone or in combination of two or more. Examples of the lithium transition metal oxide may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂, which may be referred to as NCM₃₃₃), LiNi_{0.5}Co_{0.2}Mn_{0.3}O₂ (which may be referred to as NCM₅₂₃), LiNi_{0.5}Co_{0.25}Mn_{0.25}O₂ (which may be referred to as NCM₂₁₁), LiNi_{0.6}Co_{0.2}Mn_{0.2}O₂ (which may be referred to as NCM₆₂₂), LiNi_{0.8}Co_{0.1}Mn_{0.1}O₂ (which may be referred to as NCM₈₁₁), lithium nickel cobalt aluminum oxide (e.g., LiNi_{0.85}Co_{0.15}Al_{0.05}O₂), or modified compound thereof. Examples of the lithium-containing phosphate of olivine structure may include, but are not limited to, at least one of lithium iron phosphate (such as LiFePO₄, which may be referred to as LFP), a composite material of lithium iron phosphate and carbon, lithium manganese phosphate (such as LiMnPO₄), a composite material of lithium manganese phosphate and carbon, lithium iron manganese phosphate, or a composite material of lithium iron manganese phosphate and carbon.

The weight ratio of the cathode active material in the cathode film layer is in a range of 80 wt% to 100 wt% based on a total weight of the cathode film layer.

In some embodiments, the cathode film layer further optionally includes a binding agent. As an example, the binding agent may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, or fluorine-containing acrylate resin. A weight ratio of the binder in the cathode film layer is in a range of 0 wt% to 20 wt% based on the total weight of the cathode film layer.

In some embodiments, the cathode film layer further optionally includes a conductive agent. As an example, the conductive agent may include at least one of superconducting carbon, acetylene black, carbon black, Ketjen black, carbon dots, carbon nanotubes, graphene, or carbon nanofibers. A weight ratio of the conductive agent in the cathode film layer is in the range of 0 wt% to 20 wt% based on the total weight of the cathode film layer.

In some embodiments, the cathode electrode plate 2 is prepared by the conventional ways below. The above components for preparing the cathode electrode plate 2, such as the cathode active material, the conductive agent, the binding agent, and any other components, are dispersed in a solvent (e.g., N-methylpyrrolidone) to form a cathode slurry. A solid content of the cathode slurry is in a range of 40 wt% to 80 wt%, and a viscosity at room temperature is adjusted to be in a range of 5000 mPa·s to 25000 mPa·s. The cathode slurry is then coated on a surface of the cathode current collector 21, dried, and cold pressed by a cold-rolling mill to form the cathode electrode plate 2.

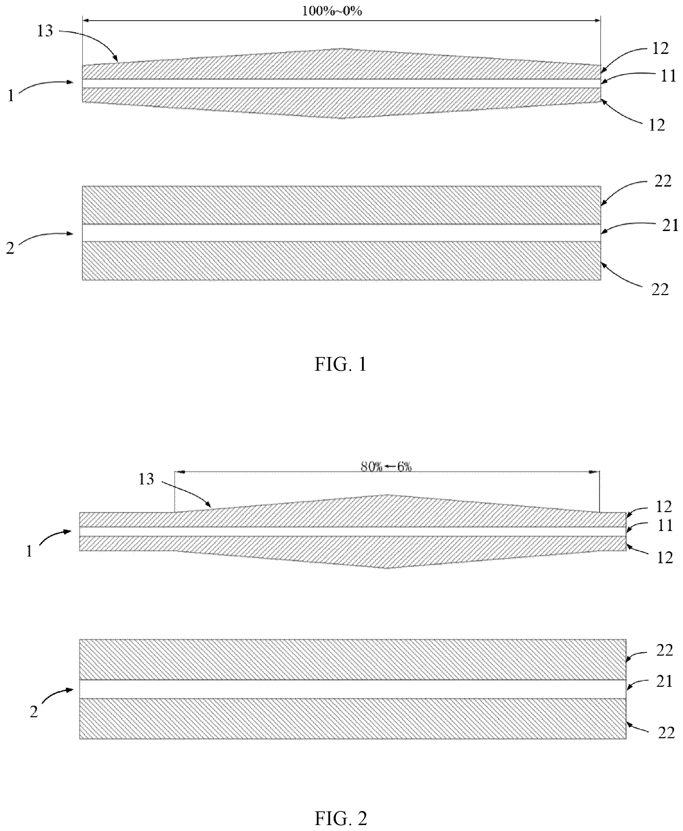

In some embodiments, a second compacted density configuration region 23 is further provided on the cathode active material layer 22 of the cathode electrode plate 2. In the second compacted density configuration region 23, a compacted density configuration was performed in a specific manner of the present disclosure. Some examples of the cathode electrode plate 2 are shown in FIG. 1 to FIG. 4.

### [Anode Electrode Plate]

The anode electrode plate 1 includes an anode current collector 11 and an anode film layer (i.e., an anode active material layer 12) disposed on at least one surface of the anode current collector 11, and the anode film layer includes an anode active material.

As an example, the anode current collector 11 has two surfaces opposite to each other in a thickness direction thereof. The anode film layer is arranged on either or both of the two opposite surfaces of the anode current collector 11.

In some embodiments, the anode current collector 11 may be a metal foil or a composite current collector. For example, the metal foil is an aluminum foil. The composite current collector may include a macromolecular material base-layer and a metal layer formed on at least one surface of the macromolecular material base-layer. The composite current collector may be formed by forming a metallic material on a macromolecular base material. The metallic material includes, but is not limited to, aluminum, aluminum alloy, nickel, nickel alloy, titanium, titanium alloy, silver, and silver alloy, etc. The macromolecular base material includes a substrate of polypropylene (PP), polyethylene terephthalate (PET), polybutylene terephthalate (PBT), polystyrene (PS), and polyethylene (PE), etc.

In some embodiments, the anode active material may be an anode active material for batteries known in this art. As an example, the anode active material may include at least one of artificial graphite, natural graphite, soft carbon, hard carbon, silicon-based materials, tin-based materials, or lithium titanate. The silicon-based material may be selected from at least one of a group consisting of elemental silicon, silicon oxides, silicon carbon compounds, silicon nitrogen compounds, and silicon alloys. The tin-based material may be selected from at least one of a group consisting of elemental tin, tin oxides, and tin alloys. However, the present disclosure is not limited to these materials, and other conventional materials that can be used as an anode active material for a battery can also be used. These anode active materials may be used alone or in combination of two or more.

In some embodiments, the anode film layer may further optionally include a binder. The binding agent may be selected from one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). A weight ratio of the binder in the anode film layer is in a range of 0 wt% to 30 wt% based on a total weight of the anode film layer.

In some embodiments, the anode film layer further optionally includes a conductive agent. The conductive agent may be selected from one or more of superconducting carbon, acetylene black, carbon black, Ketjen black, carbon dots, carbon nanotubes, graphene, and carbon nanofibers. A weight ratio of the conductive agent in the anode film layer is in a range of 0 wt% to 20 wt% based on the total weight of the anode film layer.

In some embodiments, the anode film layer may optionally include other additives, such as a thickening agent, e.g., sodium carboxymethyl cellulose (CMC-Na). A weight ratio of the other additives in the anode film layer is in a range of 0 wt% to 15 wt% based on the total weight of the anode film layer.

In some embodiments, the anode electrode plate is prepared as follows. The above components for preparing the anode electrode plate, such as the anode active material, the conductive agent, the binding agent, and any other components, are dispersed in a solvent (for example, deionized water) to form an anode slurry. A solid content of the anode slurry is in a range of 30 wt% to 70 wt%, and a viscosity at room temperature is adjusted to be in a range of 2000 mPa·s to 10000 mPa·s. The obtained anode slurry is coated on the anode current collector 11, dried, and cold pressed by, for example, a roller to obtain the anode electrode plate 1.

In some embodiments, a first compacted density configuration region 13 is further provided on the anode active material layer 12 of the anode electrode plate 1. In the first compacted density configuration region 13, a compacted density configuration is performed according to a specific manner of the present disclosure. Some examples of the anode electrode plate 1 are shown in FIG. 1 to FIG. 4.

### [Electrolyte]

The electrolyte serves to conduct ions between the cathode electrode plate 2 and the anode electrode plate 1. The kind of the electrolyte is not specifically limited in the present disclosure, and can be selected according to requirements. For example, the electrolyte may be in a liquid state, a gel state, or an all-solid state.

In some embodiments, the electrolyte employs an electrolytic solution. The electrolytic solution includes an electrolyte salt and a solvent.

In some embodiments, the electrolyte salt may be selected from one or more of lithium hexafluorophosphate, lithium tetrafluoroborate, lithium perchlorate, lithium hexafluoroarsenate, lithium bis (fluorosulfonyl) imide, lithium bis (trifluoromethanesulfonyl) imide, lithium difluorophosphate, lithium difluoro(oxalato)borate, lithium bis(oxalate) borate, lithium difluorobisoxalato phosphate, and lithium tetrafluorooxalate phosphate.

In some embodiments, the solvent may include at least one selected from a group consisting of ethylene carbonate, propylene carbonate, methyl ethyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, tetramethylene sulfone, dimethyl sulfone, methyl ethyl sulfone, and diethyl sulfone.

In some embodiments, the electrolyte further optionally includes an additive. For example, the additive may include an anode film-forming additive and a cathode film-forming additive, and may further include additives capable of improving performance of the battery, such as additives for improving overcharge performance of the battery and additives for improving high-temperature or low-temperature performance of the battery.

### [Separator]

In some embodiments, the battery further includes an isolation film. The type of the isolation film is not particularly limited in the present disclosure, and may be any well-known isolation film with a porous structure that has good chemical stability and mechanical stability.

In some embodiments, a material of the isolation film may be selected from at least one of glass fiber, non-woven fabric, polyethylene, polypropylene, and polyvinylidene fluoride. The isolation film may be a single-layer film or may be a multilayer composite film, which is not particularly limited. When the isolation film is a multilayer composite film, materials of the layers may be the same or different, which is not particularly limited.

In some embodiments, the thickness of the separator is in a range of 6 µm to 40 µm, optionally 12 µm to 20 µm.

In some embodiments, the cathode electrode plate 2, the anode electrode plate 1 and the isolation film is made into an electrode assembly by means of a winding process or a lamination process.

In some embodiments, the battery may include an outer package. The outer package is configured to package the above electrode assembly and the electrolyte.

In some embodiments, the outer package of the battery may be a hard housing, such as a hard plastic housing, an aluminum housing, and a steel housing. The outer package of the battery may be a soft package, such as a bag-type soft package. A material of the soft package may be plastic, such as polypropylene, polybutylene terephthalate, and polybutylene succinate.

The shape of the secondary battery is not particularly limited in the present disclosure, and may be cylindrical, square, or any other shape.

In some embodiments, the outer package includes a casing and a cover plate. The casing includes a bottom plate and a side plate connected to the bottom plate, and the bottom plate and the side plate enclose an accommodating cavity. The casing has an opening in communication with the accommodating cavity, and the cover plate can cover the opening to enclose the accommodating cavity. The cathode electrode plate 2, the anode electrode plate 1 and the isolation film forms an electrode assembly through a winding process or a lamination process. The electrode assembly is enclosed in the accommodating cavity. The electrolyte is immersed in the electrode assembly. The battery may include one or more electrode assemblies, and those skilled in the art can select according to specific actual requirements.

In some embodiments, the battery may be assembled into a battery module, and the battery module may include one or more batteries, the specific number of which can be selected by those skilled in the art according to the application and a capacity of the battery module.

A plurality of batteries of the battery module is sequentially arranged along a length direction of the battery module. Alternatively, the batteries may be arranged in any other manner. The plurality of batteries can be further fixed by fasteners.

Alternatively, the battery module may further include a shell having an accommodating space, and the plurality of batteries is accommodated in the accommodating space.

In some embodiments, the above battery modules may be assembled into a battery pack, and the number of the battery modules contained in the battery pack may be one or more, specific number of which can be selected by those skilled in the art according to the application and capacity of the battery pack.

The battery pack may include a battery box and a plurality of battery modules provided in the battery box. The battery box includes an upper box body and a lower box body, and the upper box body can cover the lower box body to form a closed space for accommodating the battery module. The plurality of battery modules may be arranged in the battery box in any manner.

In addition, the present disclosure further provides a powered device 3, and the powered device 3 includes at least one of the battery, the battery module, or the battery pack according to the present disclosure. The battery, the battery module or the battery pack may be used as a power supply for the powered device 3, or may be used as an energy storage unit of the powered device 3. The powered device 3 may include a mobile device (such as a mobile phone and a notebook computer), an electric vehicle (such as a pure electric vehicle, a hybrid electric vehicle, a plug-in hybrid electric vehicle, an electric bicycle, an electric scooter, an electric golf cart, and an electric truck), an electrical train, a ship, a satellite, an energy storage system and the like, but it is not limited thereto.

The electric device 3 may select the battery, the battery module, or the battery pack according to use requirements thereof.

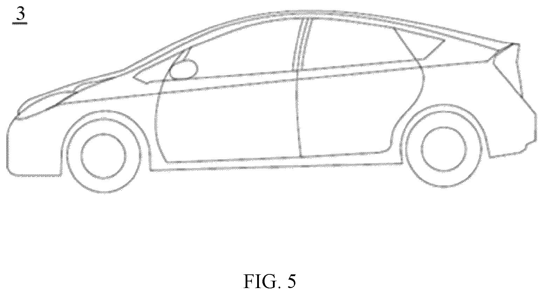

FIG. 5 illustrates a powered device 5 as an example. The powered device 5 is a pure electric vehicle, a hybrid electric vehicle, a plug-in hybrid electric vehicle and the like. In order to meet requirements of the powered device 5 for high power and high energy density of the battery, a battery pack or a battery module can be adopted.

As another example, the powered device may be a cell phone, a tablet, a laptop, and the like. The powered device is typically required to be lightweight and thin, and may employ a battery as a power source.

### [Embodiment]

In order to make the technical problems solved, technical solutions and beneficial effects of the present disclosure more clear, further detailed description will be given below in conjunction with the examples and accompanying drawings. Apparently, the described examples are only a part of the examples of the present disclosure, not all of them. The following description of at least one exemplary example is merely illustrative in nature and in no way serves as any limitation on the present disclosure and its application. Based on the examples in this present disclosure, all other examples obtained by persons of ordinary skill in the art without making creative efforts fall within the scope of protection of this disclosure.

Specific techniques or conditions, which are not specified in the examples, are carried out in accordance with techniques or conditions described in literature in the art or in accordance with product specification. The reagents or instruments used without specifying manufacturers are all conventional products which are commercially available.

### Embodiment 1

### (1) Preparation of Anode Electrode Plate

a. Graphite, a conductive agent, a binder and a dispersant were added into a stirring tank at a weight ratio of 97:0.5:1.5:1, and then deionized water was added to obtain a mixed solution. The amount of the added deionized water is 1 times a total mass of the graphite, the conductive agent, the binder, and the dispersant. The stirring tank rotated at a high speed of 1200 r/min for 4 hours. Thereafter the mixed solution was evenly coated on a copper foil by an automatic coater, in which coating CW=156 mg/1540 mm². The coated copper foil was then put into an oven and baked at 120°C for 20 minutes, and the electrode plate was reserved to wait for subsequent compacted density configuration.
b. The compacted density gradient (PD) configuration was confirmed by change of a thickness (h) of the electrode plate, and a calculation formula was h=CW/PD. The compacted density difference configuration was realized by periodic change of a gap between an upper roller and a lower roller. The dried electrode plate was rolled by a roller press, and a length of a single electrode plate of a battery was defined as a rolling cycle. The compacted density configuration length ranged from 0% of a full length of the electrode plate to 100% of the full length of the electrode plate, the compacted density difference was 0.3 g/cm³, and the thickness of the electrode plate in the compacted density configuration region varied continuously from 0.134 mm to 0.161 mm, and then to 0.134 mm.

### (2) Preparation of Cathode Electrode Plate

Lithium iron phosphate, a conductive agent, a binder and a dispersant were added into the stirring tank at a weight ratio of 97:1:1.5:0.5, and then deionized water was added to obtain a mixed solution. The amount of the added deionized water was 0.6 times a total mass of the graphite, the conductive agent, the binder, and the dispersant. The stirring tank rotated at the high speed of 1200 r/min for 4 hours. The mixed solution was evenly coated on an aluminum foil by the automatic coater, where coating CW=340 mg/1540 mm². The coated copper foil was then put into the oven and baked at 120°C for 30 minutes, and the dried electrode plate was rolled into an electrode plate with a consistent thickness of 0.191 mm by the roller press.

### (3) Assembly of Battery Cell

The above cathode and anode electrode plates and the separator were paired and wound, followed by lug shaping, laser welding with an adapting sheet, welding with a top cover, liquid injection, and welding with sealing nails to complete assembly of a battery cell. FIG. 1 illustrates a schematic partial diagram of pairing a cathode electrode plate and an anode electrode plate of this embodiment to form an electrode assembly.

### Test of Battery Cell

A test method of an infiltration duration is described below. A test current and a cutoff voltage may be modified according to actual measurements, application requirements, and an actual chemical system and health state of the battery cell. In this experiment, an LFP battery cell was discharged to 2.5 V at a rate of 1 C, and a required duration from the discharge cutoff (i.e., discharged to 2.5 V) to level balance of the electrolyte (unchanged heights of the electrolyte level before and after 2 hours represented the level balance) was recorded. The test results are shown in Table 1.

### Embodiment 2

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, the compacted density difference was 0.3 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press. FIG. 2 illustrates a schematic partial diagram of pairing a cathode electrode plate and an anode electrode plate of this embodiment to form an electrode assembly.

The infiltration duration of the assembled battery cell was tested by the same test method as in Embodiment 1, and the results of the test are shown in Table 1.

### Embodiment 3

The same electrode plate formula, coating process and assembly method of the battery cell as in Embodiment 1 were employed. The compacted density configuration length of the anode electrode plate ranged from 10% of a full length of the electrode plate to 70% of the full length of the electrode plate, the compacted density difference was 0.3 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 4

The same electrode plate formula, coating process and assembly method of the battery cell as in Embodiment 1 were employed. The compacted density configuration length of the anode electrode plate ranged from 20% of a full length of the electrode plate to 50% of the full length of the electrode plate, the compacted density difference was 0.3 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 5

The same electrode plate formula, coating process and assembly method of the battery cell as in Embodiment 1 were employed. The compacted density configuration length of the anode electrode plate ranged from 30% of a full length of the electrode plate to 40% of the full length of the electrode plate, the compacted density difference was 0.3 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 6

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, the compacted density difference was 0.1 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 7

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, the compacted density difference was 0.2 g/cm³, and the thickness of the electrode plate in the compacted density configuration region varied continuously from 0.134 mm to 0.161 mm, and then to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 8

The same electrode plate formula, coating process and assembly method of the battery cell as in Embodiment 1 were employed. The compacted density configuration length of the cathode electrode plate ranged from 0% of a full length of the electrode plate to 100% of the full length of the electrode plate, the compacted density difference was 0.3 g/cm³, and the thickness of the electrode plate in the compacted density configuration region varied continuously from 0.213 mm to 0.191 mm, and then to 0.213 mm. The anode electrode plate was rolled into an electrode plate with a consistent thickness of 0.134 mm by the roller press.

The infiltration duration of the assembled battery cell was tested by the same test method as in Embodiment 1, and the results of the test are shown in Table 1.

### Embodiment 9

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, the compacted density difference was 0.3 g/cm³, and the thickness of the electrode plate in the compacted density configuration region varied continuously from 0.213 mm to 0.191 mm, and then to 0.213 mm. The anode electrode plate was rolled into an electrode plate with a consistent thickness of 0.134 mm by the roller press.

The infiltration duration of the assembled battery cell was tested by the same test method as in Embodiment 1, and the results of the test are shown in Table 1.

### Embodiment 10

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, the compacted density difference was 0.1 g/cm³, and the thickness of the electrode plate in the compacted density configuration region varied continuously from 0.198 mm to 0.191 mm, and then to 0.198 mm. The anode electrode plate was rolled into an electrode plate with a consistent thickness of 0.134 mm by the roller press.

The infiltration duration of the assembled battery cell was tested by the same test method as in Embodiment 1, and the results of the test are shown in Table 1.

### Embodiment 11

The same electrode plate formula, coating process and assembly method of the battery cell as in Embodiment 1 were employed. Each of the compacted density configuration lengths of the anode electrode plate and the cathode electrode plate ranged from 0% to 100% of a full length of a corresponding one of the anode electrode plate and the cathode electrode plate. The compacted density difference of the anode electrode plate was 0.3 g/cm³, and the thickness of the anode electrode plate in the compacted density configuration region varied continuously from 0.134 mm to 0.161 mm, and then to 0.134 mm. The compacted density difference of the cathode electrode plate was 0.3 g/cm³, and the thickness of the cathode electrode plate in the compacted density configuration region varied continuously from 0.213 mm to 0.191 mm, and then to 0.213 mm.

The infiltration duration of the assembled battery cell was tested by the same test method as in Embodiment 1, and the results of the test are shown in Table 1.

### Embodiment 12

The same electrode plate formula, coating process and assembly method of the battery cell as in Embodiment 1 were employed. Each of the compacted density configuration lengths of the anode electrode plate and the cathode electrode plate ranged from 6% to 80% of a full length of a corresponding one of the anode electrode plate and the cathode electrode plate. The compacted density difference of the anode electrode plate was 0.3 g/cm³, and the thickness of the anode electrode plate in the compacted density configuration region varied continuously from 0.134 mm to 0.161 mm, and then to 0.134 mm. The compacted density difference of the cathode electrode plate was 0.3 g/cm³, and the thickness of the cathode electrode plate in the compacted density configuration region varied continuously from 0.213 mm to 0.191 mm, and then to 0.213 mm.

The infiltration duration of the assembled battery cell was tested by the same test method as in Embodiment 1, and the results of the test are shown in Table 1.

### Embodiment 13

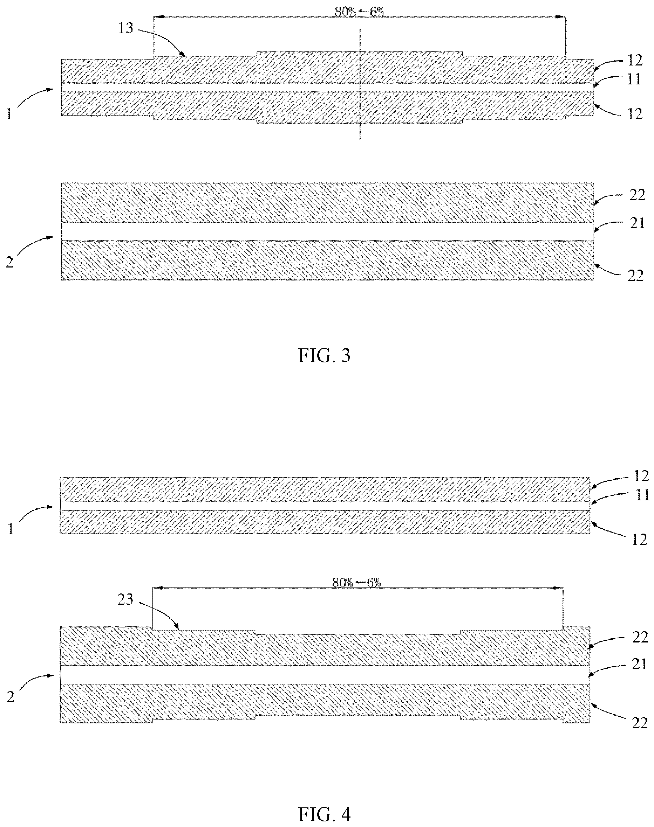

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, a total compacted density difference with three gradients was 0.3 g/cm³, and a compacted density difference at each of the three gradients was 0.1 g/cm3. The thickness of the electrode plate in the compacted density configuration region varied stepwise from 0.134 mm to 0.161 mm, and then to 0.134 mm. The cathode electrode plate was rolled into an electrode plate with a consistent thickness of 0.191 mm by the roller press. FIG. 3 illustrates a schematic partial diagram of pairing a cathode electrode plate and an anode electrode plate of this embodiment to form an electrode assembly.

The infiltration duration of the assembled battery cell was tested by the same test method as in Embodiment 1, and the results of the test are shown in Table 1.

### Embodiment 14

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, a total compacted density difference with three gradients was 0.3 g/cm³, and a compacted density difference at each of the three gradients was 0.1 g/cm3. The thickness of the electrode plate in the compacted density configuration region varied stepwise from 0.213 mm to 0.191 mm, and then to 0.213 mm. The anode electrode plate was rolled into an electrode plate with a consistent thickness of 0.134 mm by the roller press. FIG. 4 illustrates a schematic partial diagram of pairing a cathode electrode plate and an anode electrode plate of this embodiment to form an electrode assembly.

The infiltration duration of the assembled battery cell was tested by the same test method as in Embodiment 1, and the results of the test are shown in Table 1.

### Embodiment 15

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, a total compacted density difference with three gradients was 0.3 g/cm³, and a compacted density difference at each of the three gradients is 0.1 g/cm3. The thickness of the cathode electrode plate in the compacted density configuration region varied stepwise from 0.213 mm to 0.191 mm, and then to 0.213 mm. The compacted density difference of the anode electrode plate was 0.3 g/cm³ with three gradients, and a compacted density difference at each of the three gradients was 0.1 g/cm3. The thickness of the anode electrode plate in the compacted density configuration region varied stepwise from 0.134 mm to 0.161 mm, and then to 0.134 mm.

The infiltration duration of the assembled battery cell was tested by the same test method as in Embodiment 1, and the results of the test are shown in Table 1.

### Embodiment 16

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, the compacted density difference was 0.6 g/cm³, and the thickness of the anode electrode plate in the compacted density configuration region varied continuously from 0.127 mm to 0.188 mm, and then to 0.127 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 17

The same electrode plate formula, coating process and assembly method of the battery cell as in Embodiment 1 were employed. The compacted density configuration length of the anode electrode plate ranged from 6% of a full length of the electrode plate to 80% of the full length of the electrode plate, the compacted density difference was 0.7 g/cm³, and the thickness of the anode electrode plate in the compacted density configuration region varied continuously from 0.121 mm to 0.188 mm, and then to 0.121 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Embodiment 18

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, the compacted density difference was 0.8 g/cm³, and the thickness of the cathode electrode plate in the compacted density configuration region varied continuously from 0.240 mm to 0.177 mm, and then to 0.240 mm. The anode electrode plate was rolled into an electrode plate with a consistent thickness of 0.134 mm by the roller press.

The infiltration duration of the assembled battery cell was tested by the same test method as in Embodiment 1, and the results of the test are shown in Table 1.

### Embodiment 19

The same electrode plate formula, coating process and assembly method of the battery cell as in Embodiment 1 were employed. The compacted density configuration length of the cathode electrode plate ranged from 6% of a full length of the electrode plate to 80% of the full length of the electrode plate, the compacted density difference was 0.9 g/cm³, and the thickness of the cathode electrode plate in the compacted density configuration region varied continuously from 0.240 mm to 0.172 mm, and then to 0.240 mm. The anode electrode plate was rolled into an electrode plate with a consistent thickness of 0.134 mm by the roller press.

The infiltration duration of the assembled battery cell was tested by the same test method as in Embodiment 1, and the results of the test are shown in Table 1.

### Comparative Example 1

The same electrode plate formula, coating process and assembly method of the battery cell as in Embodiment 1 were employed. The anode electrode plate was rolled into an electrode plate with a consistent thickness of 0.134 mm by the roller press. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

### Comparative Example 2

The same electrode plate formula, coating process and assembly method of the battery cell as in Embodiment 1 were employed. The compacted density configuration length of the anode electrode plate ranged from 0% of a full length of the electrode plate to 100% of the full length of the electrode plate, the compacted density difference was 0.3 g/cm³. The compacted density configuration of the anode electrode plate is configured in ways that a thickness of the anode electrode plate in a region from 0% to 25% of the full length of the anode electrode plate varied continuously from 0.134 mm to 0.161 mm; a thickness of the anode electrode plate in a region from 25% to 50% of the full length of the anode electrode plate varied continuously from 0.161 mm to 0.134 mm; a thickness of the anode electrode plate in a region from 50% to 75% of the full length of the anode electrode plate varied continuously from 0.134 mm to 0.161 mm; a thickness of the anode electrode plate in a region from 75% to 100% of the full length of the anode electrode plate varied continuously from 0.161 mm to 0.134 mm. The cathode electrode plate was rolled into an electrode plate with a consistent thickness of 0.191 mm by the roller press.

The infiltration duration of the assembled battery cell was tested by the same test method as in Embodiment 1, and the results of the test are shown in Table 1.

**Table 1**

| Item | Compacte d density design length range | Compacted density configuration of anode electrode plate g/cm³ | Thickness of anode electrode plate in compacted density configuration region mm | Compa cted density configu ration of cathod e electro de plate g/cm³ | Thickn ess of cathode electrod e plate in compac ted density configu ration region mm | Infiltr ation durati on min |
|---|---|---|---|---|---|---|
| Embodiment 1 | 0~100% | 1.65~1.35~1.65 | 0.134~0.161~0.134 | 2.6 | 0.191 | 536 |
| Embodiment 2 | 6%~80% | 1.65~1.35~1.65 | 0.134~0.161~0.134 | 2.6 | 0.191 | 440 |
| Embodiment 3 | 10%~70% | 1.65~1.35~1.65 | 0.134~0.161~0.134 | 2.6 | 0.191 | 410 |
| Embodiment 4 | 20%~50% | 1.65~1.35~1.65 | 0.134~0.161~0.134 | 2.6 | 0.191 | 567 |
| Embodiment 5 | 30%~40% | 1.65~1.35~1.65 | 0.134~0.161~0.134 | 2.6 | 0.191 | 623 |
| Embodiment 6 | 6%~80% | 1.65~1.55~1.65 | 0.134~0.142~0.134 | 2.6 | 0.191 | 608 |
| Embodiment 7 | 6%~80% | 1.65~1.45~1.65 | 0.134~0.151~0.134 | 2.6 | 0.191 | 503 |
| Embodiment 8 | 0~100% | 1.65 | 0.134 | 2.3~2.6 ~2.3 | 0.213~ 0.191~ 0.213 | 590 |
| Embodiment 9 | 6~80% | 1.65 | 0.134 | 2.3~2.6 ~2.3 | 0.213~ 0.191~ 0.213 | 505 |
| Embodiment 10 | 6~80% | 1.65 | 0.134 | 2.5~2.6 ~2.5 | 0.198~ 0.191~ 0.198 | 660 |
| Embodiment 11 | 0~100% | 1.65~1.35~1.65 | 0.134~0.161~0.134 | 2.3~2.6 ~2.3 | 0.213~ 0.191~ 0.213 | 514 |
| Embodiment 12 | 6~80% | 1.65~1.35~1.65 | 0.134~0.161~0.134 | 2.3~2.6 ~2.3 | 0.213~ 0.191~ 0.213 | 390 |
| Embodiment 13 | 6~80% | 1.65~1.35~1.65 | 0.134~0.161~0.134 | 2.6 | 0.191 | 428 |
| Embodiment 14 | 6~80% | 1.65 | 0.134 | 2.3~2.6 ~2.3 | 0.213~ 0.191~ 0.213 | 475 |
| Embodiment 15 | 6~80% | 1.65~1.35~1.65 | 0.134~0.161~0.134 | 2.3~2.6 ~2.3 | 0.213~ 0.191~ 0.213 | 406 |
| Embodiment 16 | 6%~80% | 1.75~1.15~1.75 | 0.127~0.188~0.127 | 2.6 | 0.191 | 445 |
| Embodiment 17 | 6%~80% | 1.85~1.15~1.85 | 0.121~0.188~0.121 | 2.6 | 0.191 | 474 |
| Embodiment 18 | 6~80% | 1.65 | 0.134 | 2.0~2.8 ~2.0 | 0.240~ 0.177~ 0.240 | 500 |
| Embodiment 19 | 6~80% | 1.65 | 0.134 | 2.0~2.9 ~2.0 | 0.240~ 0.172~ 0.240 | 525 |
| Comparative Example 1 | 0~100% | 1.65 | 0.134 | 2.6 | 0.191 | 685 |
| Comparative Example 2 | 0~100% | 1.65~1.35~1.65 ~1.35~1.65 | 0.134~0.161~0.134 ~0.161~0.134 | 2.6 | 0.191 | 570 |

In Embodiment 1 of Table 1, the compacted density configuration "1.65~1.35~1.65" of the anode electrode plate indicated that the compacted density of the anode active material layer gradually changed from 1.65 g/cm³ to 1.35 g/cm³, and then gradually changed to 1.65 g/cm³ from one end to another end of the compacted density configuration length range. The thickness "0.134~0.161~0.134" of the anode electrode plate in the compacted density configuration region indicated that the thickness of the anode active material layer gradually changed from 0.134 mm to 0.161 mm, and then gradually changed to 0.134 mm from the one end to the another end of the compacted density configuration length range. The meanings of "~" in the data of the compacted density configuration and the thickness of the electrode plate in other embodiments and comparative examples were similar to that of Embodiment 1.

Comparing the test data of Embodiment 1, Embodiment 8, Embodiment 11, and Comparative Example 1, it can be seen that the infiltration rate of the battery in the electrolyte can be effectively improved and the infiltration duration can be reduced by performing compacted configuration design on the entire length of the anode active material layer of the anode electrode plate, the entire length (0% to 100%) of the cathode active material layer of the cathode electrode plate, or both of the anode electrode plate and the cathode electrode plate. The infiltration efficiency of the electrolyte was higher and the infiltration duration was shorter when performing compacted density configuration on both of the anode electrode plate and the cathode electrode plate.

Comparing the test data from Embodiment 1 to Embodiment 5, it can be seen that when the compacted density configuration region was set to extend from a position at 6% of the full length of the electrode plate to a position at 80% of the full length of the electrode plate, the infiltration duration was shorter than the infiltration duration when the compacted density configuration region covered the entire length (0%~100%) of the electrode plate, indicating that the infiltration rate of the electrolyte can be improved better when the compacted density configuration region extended from the position at 6% of the full length of the electrode plate to the position at 80% of the full length of the electrode plate. Furthermore, when the compacted density configuration region extended from the position at 10% of the full length of the electrode plate to the position at 70% of the full length of the electrode plate, the infiltration duration was shorter than the infiltration duration when the compacted density design region extended from the position at 6% of the full length of the electrode plate to the position at 80% of the full length of the electrode plate, indicating that the infiltration rate of the electrolyte can be improved better when the compacted density configuration region extended from the position at 10% of the full length of the electrode plate to the position at 70% of the full length of the electrode plate. In Embodiment 4 and Embodiment 5, the ranges of the compacted density configuration regions were reduced to 20%~50% and 30%~40% of the total length of the electrode plate, respectively, and the infiltration durations were prolonged as compared to Embodiment 1 to Embodiment 3.

Comparing Embodiment 6 with Embodiment 2, it can be seen that the compacted density difference in the compacted density configuration region likewise affected the infiltration rate of the electrolyte. It can be seen from the test data of Embodiment 12 that when the compacted density configuration region extended from the position at 6% of the full length of the electrode plate to the position at 80% of the full length of the electrode plate, compacted density configuration was performed on both of the anode electrode plate and the cathode electrode plate, and the compacted density difference was set in an appropriate range, the infiltration rate of the electrolyte can be significantly increased and the infiltration duration can be significantly shortened. The infiltration duration of Embodiment 12 was only 390 minutes.

It should be noted that the present disclosure is not limited to the above-mentioned embodiments. The above embodiments are merely illustrative, and embodiments having substantially the same composition as that of technical ideas and playing the same effect in the range of the technical solution of the present disclosure shall all included in the technical scope of the present disclosure. In addition, without departing from the spirit of the present disclosure, various modifications which are applied to the embodiments and can be conceived of by those skilled in the art, and other manners constructed by combining part of the components in the embodiments are also included within the scope of the present disclosure.

## Claims

1. An anode electrode plate, comprising:
an anode current collector; and
an anode active material layer provided at a surface of the anode current collector, the anode active material layer having a first compacted density configuration region,
wherein in the first compacted density configuration region, a compacted density of the anode active material layer gradually decreases and then gradually increases in an extending direction of the anode electrode plate.

2. The anode electrode plate according to claim 1, wherein the first compacted density configuration region covers the entire anode electrode plate in a length direction of the anode electrode plate; or
the first compacted density configuration region extends from a position at 6% of a length of the anode electrode plate to a position at 80% of the length of the anode electrode plate, and optionally, the first compacted density configuration region extends from a position at 10% of the length of the anode electrode plate to a position at 70% of the length of the anode electrode plate.

3. The anode electrode plate according to claim 1 or 2, wherein in the first compacted density configuration region, the compacted density of the anode active material layer varies continuously in the extending direction of the anode electrode plate.

4. The anode electrode plate according to claim 3, wherein in the first compacted density configuration region, a difference between a maximum compacted density and a minimum compacted density of the anode active material layer in the extending direction of the anode electrode plate ranges from 0.01 g/cm³ to 1.00 g/cm³, and
optionally, in the first compacted density configuration region, the difference between the maximum compacted density and the minimum compacted density of the anode active material layer in the extending direction of the anode electrode plate ranges from 0.01 g/cm³ to 0.60 g/cm³.

5. The anode electrode plate according to any one of claims 1 to 4, wherein in the extending direction of the anode electrode plate, a compacted density of the anode active material layer at two ends of the first compacted density configuration region varies continuously with a compacted density of the anode active material layer outside the first compacted density configuration region.

6. The anode electrode plate according to claim 1 or 2, wherein in the first compacted density configuration region, the compacted density of the anode active material layer varies in a gradient in the extending direction of the anode electrode plate.

7. The anode electrode plate according to claim 6, wherein in the first compacted density configuration region, the compacted density of the anode active material layer varies in 3 to 15 gradients, and
optionally, a compacted density difference between compacted densities at two adjacent gradients ranges from 0.01 g/cm³ to 0.30 g/cm³.

8. The anode electrode plate according to any one of claims 1 to 7, wherein in the first compacted density configuration region, a length of a region where the compacted density of the anode active material layer continuously decreases is equal to a length of a region where the compacted density of the anode active material layer continuously increases.

9. A cathode electrode plate, comprising:
a cathode current collector; and
a cathode active material layer provided at a surface of the cathode current collector, the cathode active material layer having a second compacted density configuration region,
wherein in the second compacted density configuration region, a compacted density of the cathode active material layer gradually increases and then gradually decreases in an extension direction of the cathode electrode plate.

10. The cathode electrode plate according to claim 9, wherein the second compacted density configuration region covers the entire cathode electrode plate in a length direction of the cathode electrode plate; or
the second compacted density configuration region extends from a position at 6% of a length of the cathode electrode plate to a position at 80% of the length of the cathode electrode plate, and optionally, the second compacted density configuration region extends from a position at 10% of the length of the cathode electrode plate to a position at 70% of the length of the cathode electrode plate.

11. The cathode electrode plate according to claim 9 or 10, wherein in the second compacted density configuration region, the compacted density of the cathode active material layer varies continuously in the extending direction of the cathode electrode plate.

12. The cathode electrode plate according to claim 11, wherein in the second compacted density configuration region, a difference between a maximum compacted density and a minimum compacted density of the cathode active material layer in the extending direction of the cathode electrode plate ranges from 0.01 g/cm³ to 1.50 g/cm³, and
optionally, in the second compacted density configuration region, the difference between the maximum compacted density and the minimum compacted density of the cathode active material layer in the extending direction of the cathode electrode plate ranges from 0.01 g/cm³ to 0.80 g/cm³.

13. The cathode electrode plate according to any one of claims 9 to 12, wherein in the extending direction of the cathode electrode plate, a compacted density of the cathode active material layer at two ends of the second compacted density configuration region varies continuously with a compacted density of the cathode active material layer outside the second compacted density configuration region.

14. The cathode electrode plate according to claim 9, wherein in the second compacted density configuration region, the compacted density of the cathode active material layer varies in a gradient in the extending direction of the cathode electrode plate.

15. The cathode electrode plate according to claim 14, wherein in the second compacted density configuration region, the compacted density of the cathode active material layer varies in 3 to 20 gradients, and
optionally, a compacted density difference between compacted densities at two adjacent gradients ranges from 0.01 g/cm³ to 0.50 g/cm³.

16. The cathode electrode plate according to any one of claims 9 to 15, wherein in the second compacted density configuration region, a length of a region where the compacted density of the cathode active material layer continuously increases is equal to a length of a region where the compacted density of the cathode active material layer continuously decreases.

17. An electrode assembly, comprising:
an anode electrode plate; and
a cathode electrode plate,
wherein the anode electrode plate is the anode electrode plate according to any one of claims 1 to 8 and/or the cathode electrode plate is the cathode electrode plate according to any one of claims 9 to 16.

18. The electrode assembly according to claim 17, wherein the anode electrode plate is the anode electrode plate according to any one of claims 1 to 8;
the cathode electrode plate is the cathode electrode plate according to any one of claims 9 to 16; and
a position of the first compacted density configuration region of the anode electrode plate corresponds to a position of the second compacted density configuration region of the cathode electrode plate.

19. The electrode assembly according to claim 17 or 18, wherein the electrode assembly is a cylindrical electrode assembly formed by stacking and winding the anode electrode plate and the cathode electrode plate.

20. A battery, comprising:
a casing having an inner cavity;
the electrode assembly according to any one of claims 17 to 19, the electrode assembly being accommodated in the inner cavity of the casing; and
an electrolyte contained in the inner cavity of the casing and infiltrating the electrode assembly.

21. An electric device, comprising the battery according to claim 20.
